Europäisches Patentamt

European Patent Office

Office européen des brevets

(11) Veröffentlichungsnummer: **0 215 268**

**A1**

# (12) EUROPÄISCHE PATENTANMELDUNG

(21) Anmeldenummer: 86110766.2

(22) Anmeldetag: 04.08.86

(51) Int. Cl.4: **B23Q 17/09**

(30) Priorität: 20.08.85 DE 3529808

(43) Veröffentlichungstag der Anmeldung:
25.03.87 Patentblatt 87/13

(84) Benannte Vertragsstaaten:
AT BE CH DE FR GB IT LI LU NL SE

(71) Anmelder: **Siemens Aktiengesellschaft Berlin und München**
**Wittelsbacherplatz 2**
**D-8000 München 2(DE)**

(72) Erfinder: **Stephan, Jürgen-Dieter, Dipl.-Ing.**
**Zweigstrasse 4**
**D-8080 Emmering(DE)**
Erfinder: **Tesch, Richard, Dipl.-Ing.**
**Flurstrasse 21**
**D-8011 Siegertsbrunn(DE)**
Erfinder: **Bärbock, Jörg, Dipl.-Ing.**
**Schulstrasse 16**
**D-3017 Pattensen(DE)**
Erfinder: **Seitz, Max-Gerhard, Dipl.-Ing.**
**Autharistrasse 36**
**D-8000 München 90(DE)**

(54) **Bewertungsverfahren und Vorrichtung zum Erkennen der Schnittqualität beim Trennen von Werkstoffen.**

(57) Verfahren und Vorrichtung zur augenblicklichen Feststellung von Beschädigungen und Verschleißzustand an Schneidwerkzeugen, ferner zur Schnittqualitätsbestimmung (Grathöhe) durch Auswertung der in schneller Taktfolge bei der Bearbeitung entstehenden hoch-und niederfrequenten Schallemissionen. Die Schallemissionsauswerteeinrichtung umfaßt mindestens zwei Sensoren mit anschließenden Schaltmitteln, die die Signale auswerten und Aussagen zur Schnittqualität an eine Kontroll-und Registriereinheit weitergeben, die in einer Recheneinheit zusammengefaßt sind.

## Bewertungsverfahren und Vorrichtung zum Erkennen der Schnittqualität beim Trennen von Werkstoffen.

Die Erfindung betrifft ein Verfahren zur Überwachung und Qualitätskontrolle beim Fertigungsverfahren Trennen speziell Zerteilen und Spanen mit geometrisch bestimmten und unbestimmten Schneiden wie zum Beispiel Stanzen von Elektroblechen, Drehen und Fräsen oder Schleifen, mit einer Vorrichtung zur Analyse der beim Schneidprozeß entstehenden Schallemission, bestehend aus einer Schallemissionsauswerteeinrichtung mit Sensoren zum Erkennen der hochfrequenten Schallsignale in Auswertebereichen während eines Arbeitszyklus. Gegenstand der Erfindung ist ferner eine Vorrichtung zur Durchführung dieses Verfahrens.

Seit der Entwicklung von numerischen Steueranlagen werden verschiedene Werkzeugmaschinen verbreitet vollautomatisch betrieben. Da bei solchen Werkzeugmaschinen die Steuersignale für einen vorbestimmten Vorschub oder Schnitt nach vorbestimmten Programmen automatisch an Arbeits-bzw. Werkstücktische oder Werkzeugträger angelegt werden, werden die Schneid-oder Spanabhebvorgänge auch im Fall von beschädigten oder abgenutzten Werkzeugen weitergeführt, so daß Ausschuß erzeugt wird.

In der DE-OS 2 557 428 ist eine Vorrichtung zur augenblicklichen Feststellung einer Beschädigung eines Schneidwerkzeuges im Verlauf eines Schneid-bzw. Spanabhebevorgangs beschrieben und dargestellt. Diese Vorrichtung besteht aus einem Detektor zur Erzeugung eines Ausgangssignals entsprechend der Schwingung eines Schneidwerkzeugs oder eines durch dieses bearbeiteten Werkstücks, ferner einer Signalverarbeitungsschaltung und einer Einrichtung zum Vergleichen des Ausgangssignals von der Signalverarbeitungsschaltung mit einem vorbestimmten Bezugswert. Die Signalverarbeitungsschaltung hat eine Mittelwertschaltung zur Erzielung des quadratischen Mittelwertes des Ausgangssignals des Detektors. Die Vergleichseinrichtung weist einen Komparator zum Vergleichen des Ausgangssignales einer Normal-oder Solldatenspeicherschaltung mit dem Ausgangssignal der Signalverarbeitungsschaltung auf.

Diese und weitere bekannte Vorrichtungen sind für die Mehrzahl der Anwendungsfälle von Schneiden (Drehen, Fräsen, Bohren, Stanzen) ungeeignet, weil sie als Überwachungseinrichtung zu träge reagieren. Außerdem sind sie nicht für komplexe Bearbeitungsvorgänge anwendbar bzw. erfordern sie einen zu hohen apparativen Aufwand und können daher nur in Spezialfällen Anwendung finden.

Der Erfindung liegt die Aufgabe zugrunde, das eingangs beschriebene Verfahren und eine Vorrichtung zur Durchführung dieses Verfahrens zu realisieren. Damit soll die Schnittqualität, die Oberflächengüte und Grathöhe sowie der augenblickliche Werkzeugverschleiß erkannt werden, ohne den Fertigungsablauf zu unterbrechen. Ferner sollen mit der Erfindung die in schneller Taktfolge entstehenden Schallemissionssignale ausgewertet und Aussagen zur Schnittqualität an eine Kontroll-und Registriereinrichtung weitergegeben werden.

Die Lösung dieser Aufgabe ist in den Merkmalen der Patentansprüche angegeben.

Der Vorteil der Erfindung liegt darin begründet, daß gegenüber den bekannten Verfahren eine genauere Spezifizierung der unterschiedlichen Fehlerquellen (Werkzeugausbruch, Werkzeugtotalbruch, Werkzeugabnutzung) ermöglicht wird. Die genaue Beurteilung der Schallemission erlaubt die Zuordnung zu den Bearbeitungsprozessen relevanten Größen wie Oberflächengüte und Grathöhe, so daß zum Beispiel längere Stanzzeiten und eine aufsichtsarme Fertigung möglich werden. Außerdem ist die Erfindung auch bei komplexen Bearbeitungsvorgängen (zum Beispiel Drehen einer Nutenwelle) einsetzbar, da spezifische Störgrößen differenziert erfaßt werden können.

Die Erfindung wird anhand eines Ausführungsbeispiels erläutert.

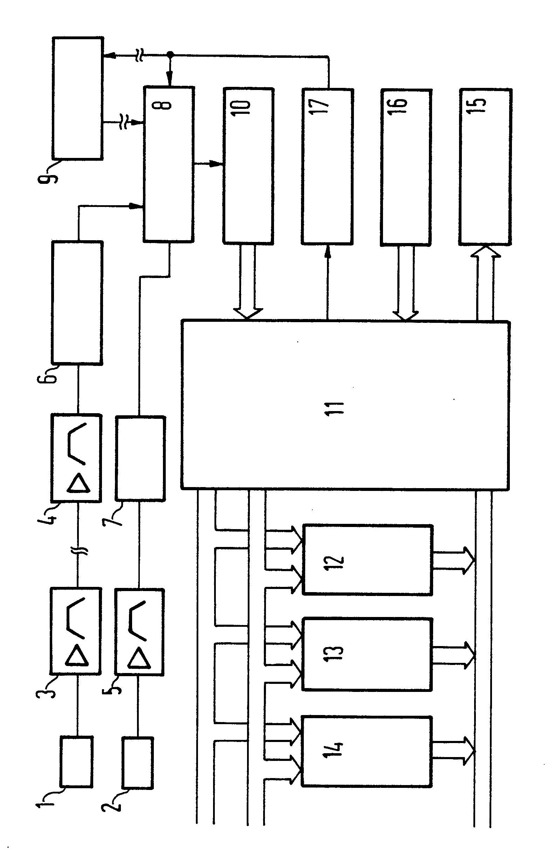

In der Figur sind mit 1 und 2 Sensoren, zum Beispiel handelsübliche Piezo-Sensoren zur Körperschallmessung, bezeichnet, an die sich Verstärker 3 bis 5 anschließen. Auf die Verstärker folgen Signalaufbereitungen 6 für unteren und oberen Schwellwert sowie Absolutwertbildung und Energiebewertung der eingehenden Signale und Signalaufbereitung 7, die eine Frequenzanalogumwandlung mit anschließender Schwellwerterfassung beinhaltet. Der elektrotechnische Aufbau dieser Bewertungen ist mit handelsüblichen Operationsverstärkerschaltungen aufgebaut. Die Ausgangssignale aus 6 und 7 sind mit einem Steuersignal aus der externen Steuerung 9 Eingangssignale für eine weitere Bewertungseinheit, zum Beispiel Triggermodul 8. Die beiden digital vorliegenden Signale aus 9 und 7 werden zur Bewertung des analogen Signals aus 6 verwendet. Dieser Schaltungsteil ist mit Digitalbausteinen (zum Beispiel Typ 4073) und Operationsverstärkern (zum Beispiel Typ 3140) und üblichen Zusatzbeschaltungen aufgebaut. Ein weiterer Schaltungsteil vom Triggermodul 8 umfaßt einen Instrumentenverstärker (zum Beispiel OPAD 625), welcher so beschaltet ist, daß mit digital vorgebbarer Verstärkung aus 17 gearbeitet werden kann.

Am Ausgang der Bewertungseinheit - (Triggermodul) liegt eine Digitalisierungsschaltung 10 (zum Beispiel Voltage to frequency converter VFC100) und ein programmierbarer Frequenzteiler (zum Beispiel 4031) mit Beschaltung zur Anpassung an die maximal erreichbare Zählfrequenz der Recheneinheit 11 (zum Beispiel single chip micro computer 8051 mit Zusatzbeschaltung bzw. SAB 8086 oder Vergleichbarem). Der Ausgang von 10 ist mit einem oder mehreren Timer-Eingängen der Recheneinheit 11 verbunden. Zur Recheneinheit gehören Speicher 12 bis 14 (RAM, IPROM, EEPROM bzw. gepuffertes CMOS-RAM). Als periphere Einheit sind eine Anzeige 15 (zum Beispiel LCD-Anzeige H2572), eine alphanumerische Tastatur 16 und ein Interface (Anpaßschaltung 17) angeschlossen. Dieses Interface wird von einem Digital-Port der Recheneinheit 11 angesteuert und beinhaltet Dekodierbausteine (PROM HM 1 -7649-A5), Zwischenspeicher (latch 74 LS 373), Analogmultiplexer (zum Beispiel AD 7501) und Pegelumsetzer bzw. Optokoppler (CNY 17) zur galvanischen Trennung der ausgegebenen Steuerungssignale an die externe Maschinensteuerung 9.

Die Erfindung wird an einer Ausführungsform erläutert, die beispielsweise beim Stanzen von Elektroblechen einsetzbar ist. Dabei werden zweckmäßig zwei in ihrer Frequenzempfindlichkeit unterschiedliche Sensoren 1, 2 an der nicht dargestellten Bearbeitungsmaschine angekoppelt. Diese Sensorsignale des Werkzeugs und des zu bearbeitenden Gegenstandes werden verstärkt 3 -5 und aufbereitet 6, 7. Sie führen sie ferner der Bewertungseinheit, zum Beispiel dem Triggermodul 8, zu. Diese Bewertungseinheit setzt mit Maßgabe der externen Steuerung 9 sogenannte Bewertungsfenster, in denen weitere Teilbereiche der vom Bearbeitungsvorgang ausgelösten Schallemissionen ausgewertet werden. Die externe Steuerung sorgt unter anderem für die Synchronisation mit den Bearbeitungsvorgang und ermittelt aus einem produktionsabhängigen Speicher, zum Beispiel 12 und 14, Meßvorgaben, die in Abhängigkeit von gespeicherten Werten die Schallemissionsauswertung im Triggermodul beeinflussen. Im Triggermodul wird nach Maß gabe der vom zweiten Sensor 2 und der externen Steuerung gelieferten Werte eine Bewertung der Schallemissionssignale des ersten Sensors 1 unter anderem nach Amplitude, Frequenz und Energieinhalt vorgenommen.

Bei der Bearbeitung komplexer Schneidvorgänge mit Mehrfachfolgewerkzeugen und gleichzeitiger Umformung ist es notwendig, aus der externen Steuerung 9 Referenzsignale zu generieren, die eine Zuordnung der Bewertungsfenster zu den im Schneidprozeß ablaufenden Vorgängen ermöglicht. Ein analoger Fall liegt zum Beispiel beim Drehen mit unterbrochenen Oberflächen, zum Beispiel Nutenwelle, vor, wo das Nutzsignal vom Sensor 1 in gewissen Zeitbereichen keine auswertbare Information enthält.

Das Triggermodul ist so aufgebaut, daß die in einem Probelauf gefundenen Grenzwerte und zulässigen Signalverläufe im Bearbeitungsfall von der Recheneinheit vorgegeben werden können.

Der Ausgang des Triggermoduls liefert in einigen Zeitbereichen (Bewertungsfenster) dem Sensor 1 proportionale Signale, die zum Beispiel durch Amplitudenfrequenzumwandlung digitalisiert einer Recheneinheit 11 zugeleitet werden. Als Recheneinheit kann beispielsweise ein Single-Chip-Micro-Computer verwendet werden.

In der Recheneinheit wird eine Datenanalyse und Komprimierung zu sogenannten Stützpunkten dergestalt vorgenommen, daß zum Beispiel aus vielen Einzelereignissen (Werkzeug kommt mit dem Werkstück in Kontakt, Werkzeug schert Material, Werkzeug bricht Material und Trennvorgang ist beendet) eine Bewertung abgeleitet werden kann, die auf den Werkzeugverschleiß und die Grathöhe des bearbeiteten Werkstückes schließen läßt. Die Bewertung ist so aufgebaut, daß sich sowohl sprunghafte Veränderungen, die zum Beispiel auf einen Werkzeugbruch hindeuten, als auch allmähliche Veränderungen, die auf ein stumpfer werdendes Werkzeug schließen lassen, erkannt werden. An die Recheneinheit 11 sind zu diesem Zweck dynamische und statische Speicher 12 bis 14 angeschlossen, die Programm, Daten und einen nicht flüchtigen Speicherbereich für eine Werkzeug-und Materialbibliothek enthalten.

Für Ein-und Ausgaben ist für Kommunikationszwecke eine Tastatur 16 und eine Anzeige 15 vorhanden. Ein Interface 17, zum Beispiel in Form einer diskreten Schaltung, stellt die Verbindung zu der externen Steuerung 9 her, die sowohl zum Ausgeben von Alarmmeldungen, Abschaltungen und schrittweisen Anpassungen der Bewertung verwendet wird.

## Ansprüche

1. Verfahren zur Überwachung und Qualitätskontrolle beim Fertigungsverfahren Trennen, speziell Zerteilen und Spanen mit geometrisch bestimmten und unbestimmten Schneiden, zum Beispiel Stanzen von Elektroblechen, Drehen, Fräsen und Schleifen mit einer Vorrichtung zur Analyse der beim Schneidprozeß entstehenden Schallemission, bestehend aus einer Schallemissionsauswerteeinrichtung mit einem Sensor zum Erkennen der hochfrequenten Schallsignale im Auswertebereich während eines Arbeitszyklus, **dadurch gekennzeichnet**, daß während eines Arbeitszyklus beliebig viele Auswertebereiche (Werkzeug kommt mit dem Werkstück in Kontakt, Werkzeug schert Matrial, Werkzeug bricht Material und Trennvorgang ist beendet) mit zwei Sensoren (1, 2) überprüft werden, von denen der eine hochfrequente Schallemissionsdaten an eine Überwachungseinheit (8) leitet und der zweite, niederfrequentere Sensor (2) zur Bewertung dieses Meßsignals dient, so daß die ermittelten Daten nach einer Digitalisierung (10) einer Recheneinheit (11) zugeführt werden, die die Auswertung und Steuerung des weiteren Verfahrensablaufs in Abhängigkeit von der ermittelten Schnittqualität vornimmt.

2. Verfahren nach Anspruch 1, **dadurch gekennzeichnet**, daß mehrere Sensoren verwendet werden, denen bestimmte Frequenzbereiche zugeordnet sind, und zwar zum Beispiel eine Frequenz zum Material trennen und eine Frequenz für Materialverformen.

3. Verfahren nach Anspruch 1, **dadurch gekennzeichnet**, daß die Auswertung über mehrere Arbeitszyklen an sogenannten Stützpunkten zusammengefaßt und eine Aussage über den Werkzeugzustand geschaffen wird.

4. Verfahren nach Anspruch 3, **dadurch ge kennzeichnet**, daß nach Auswertung eines oder mehrerer Auswertebereiche, auch innerhalb eines Arbeitszyklus die Fertigung des Trennvorgangs unterbrochen werden kann und daß an den Stützpunkten aufgrund der ermittelten Werte Korrekturen des Arbeitsablaufs und des Bewertungsmodus vorgenommen werden können.

5. Verfahren nach den Ansprüchen 1 bis 4 zur Fertigungsüberwachung bei komplexen Schneidvorgängen, zum Beispiel Drehen von Bauteilen mit unterbrochenen Oberflächen (Nuten), **dadurch gekennzeichnet**, daß in Abhängigkeit von der Oberfläche des zu bearbeitenden Werkstücks ein online und nicht zwischengespeichertes Referenzsignal vorgegeben wird, das Unregelmäßigkeiten Rechnung trägt, das heißt, zum Beispiel die Bewertung im Nutenbereich unterbricht.

6. Verfahren nach Anspruch 5, **dadurch gekennzeichnet**, daß dieses Referenzsignal in einfachen Fällen auch nur in einem Probelauf automatisch gefunden und abgespeichert wird.

7. Verfahren nach Anspruch 5, **dadurch gekennzeichnet**, daß das Referenzsignal auch aus der auftretenden Schallemission oder aus einer an der Bearbeitungsmaschine schon vorhandenen Steuer-und Überwachungseinrichtung abgeleitet werden kann.

8. Verfahren nach Anspruch 6, **dadurch gekennzeichnet**, daß diese Abspeicherung spezifisch für verschiedene Werkzeuge erfolgt und die Auflösung in eine Aufteilung von beliebig vielen Bearbeitungsschritten nur vom Bearbeitungsvorgang und verfügbaren Speicher abhängig ist.

9. Vorrichtung zur Durchführung des Verfahrens nach den Ansprüchen 1 bis 8, **dadurch gekenn zeichnet**, daß zwei oder mehrere Sensoren (1, 2) mit nachgeschalten Signalaufbereitungen (3, 7) vorgesehen sind, deren Signale einer Bewertungseinheit (8) zugeführt werden, an deren weiteren Eingang eine externe Steuerung (9) anliegt, daß auf die Bewertungseinheit eine Digitalisierung (10) folgt, deren Signale in eine Recheneinheit (11) einfließen, die Speicher (12 -14) integriert oder angeschlossen hat und als Peripherieeinheit eine Anzeige (15), eine Tastatur (16) und Interface (17) aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 600 680 (WESTINGHOUSE ELECTRIC CORP.) * Anspruch 11; Seiten 8, 9; Seite 12, Zeile 13 - Seite 14, Zeile 1; ·Figuren 1-6 * | 1,9 | B 23 Q 17/09 |
| | --- | | |
| A | US-A-3 930 248 (KELLER) * Spalte 2, Zeilen 6-34; Spalte 3, Zeilen 18-48; Anspruch 10; Figuren 1-5 * | 1,9 | |
| | --- | | |
| A | SOVIET INVENTIONS ILLUSTRATED, Sektion Mechanik, Woche C26, 6. August 1980, Zusammenfassungsnr. F6952 P54, Derwent Publications Ltd., London, GB; & SU - A - 697 262 (ROST AGRIC EQPT INS) 25.11.1979 | 1,9 | |
| | --- | | |
| P,A | SOVIET INVENTIONS ILLUSTRATED, Sektion Mechanik, Woche 8538, 1. November 1985, Zusammenfassungsnr. 235621 P56, Derwent Publications Ltd., London, GB; & SU - A - 1 146 175 (ROST AGRIC ENG INST) 23.03.1985 (Kat. A) | 1,9 | |
| | --- -/- | | |

**RECHERCHIERTE SACHGEBIETE (Int. Cl.4)**

B 21 D 55/00
B 23 Q 11/00
B 23 Q 15/00
B 23 Q 17/09
B 30 B 15/28

Der vorliegende Recherchenbericht wurde für alle Patentansprüche erstellt.

| Recherchenort | Abschlußdatum der Recherche | Prüfer |
|---|---|---|
| BERLIN | 28-11-1986 | MARTIN A E W |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 4, Nr. 105 (M-23)[587], 26. Juli 1980; & JP - A - 55 65054 (SUMITOMO DENKI KOGYO K.K.) 16.05.1980<br><br>--- | 1,2,9 | |
| A | US-A-3 793 627 (DARREL et al.)<br>* Figuren 3, 4 *<br><br>--- | 1,9 | |
| A | DE-A-2 125 426 (G. MÜLLER KUGELLAGERFABRIK KG)<br>* Figur 4 *<br><br>--- | 1,9 | |
| D,A | DE-A-2 557 428 (TOKYO SHIBAURA ELECTRIC CO.)<br>* Anspruch 1 *<br><br>--- | 1,9 | |
| P,A | EP-A-0 165 482 (OMRON TATEISI ELECTRONICS CO.)<br>* Anspruch 1; Figuren 8, 10 *<br><br>----- | 1,9 | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| BERLIN | 28-11-1986 | MARTIN A E W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82